(19) **Europäisches Patentamt**

**European Patent Office**

**Office européen des brevets**

(11) **EP 0 620 368 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int Cl.⁶: **F04C 2/18**

(21) Anmeldenummer: **94109864.2**

(22) Anmeldetag: **26.06.1994**

(54) **Zahnradpumpe**

Gear pump

Pompe à engrenages

(84) Benannte Vertragsstaaten:
**CH DE LI**

(43) Veröffentlichungstag der Anmeldung:
**19.10.1994 Patentblatt 1994/42**

(73) Patentinhaber: **Maag Pump Systems Textron AG**
**8023 Zürich (CH)**

(72) Erfinder:
- **Blume, Peter**
  **CH-8051 Zürich (CH)**

- **Stehr, Roger**
  **CH-8180 Bülach (CH)**

(74) Vertreter: **Troesch Scheidegger Werner AG**
**Patentanwälte,**
**Siewerdtstrasse 95,**
**Postfach**
**8050 Zürich (CH)**

(56) Entgegenhaltungen:
DE-A- 1 958 225          DE-C- 294 364
DE-C- 944 355            GB-A- 141 841

## Beschreibung

Die vorliegende Erfindung betrifft eine Zahnradpumpe nach dem Oberbegriff von Anspruch 1 sowie ein Verfahren zur Einstellung des Lagerspiels an einer derartigen Zahnradpumpe nach dem Oberbegriff von Anspruch 9.

Es ist bekannt, dass Gleitlagerungen, insbesondere für Zahnradpumpen, eine äusserst tragfähige und, bei Lagerschmierung mit Fördergut, äusserst einfache Lagerungstechnik darstellen. Durch die Schmierung mit dem Fördergut wird aber die Lagercharakteristik mit den variierenden Eigenschaften des Fördergutes variabel, d.h. die Eigenschaften des Lagers variieren mit den verschiedenen Betriebsbedingungen bzw. dem variierenden Fliessverhalten des jeweiligen Fördergutes.

Die Funktiontüchtigkeit des Gleitlagers ist nur in einem relativ engen Bereich der Lagertemperatur und der Tragfähigkeit des als Lagermedium eingesetzten Fördergutes gewährleistet. Beide genannten Grössen, d.h. Lagertemperatur und Tragfähigkeit, sind aber vom radialen Lagerspiel abhängig. Je grösser das Lagerspiel ist, desto niedriger ist die im Lagerspalt durch Scherung erzeugte Wärme und damit Lagertemperatur. Je kleiner das Lagerspiel ist, desto besser ist aber die Lagertragfähigkeit.

So ist aus der DE-OS 19 58 225, von welcher der Oberbegriff des Anspruchs 1 ausgeht, eine Zahnradpumpe bekannt, bei der die Rotoren fördermediumsgeschmiert gleitgelagert sind. Im weiteren sind axial federgespannt Dichtungskörper vorgesehen, welche sich seitlich an die Zahnräder anlegen.

Aus der DE-C 294364 ist ein axial geschlitzter Lagerkörper bekannt, der es ermöglicht, im Rahmen seiner Elastizität das Lagerspiel zu verstellen, um mit dieser Nachstellung des Lagerspiels den ursprünglich guten Passitz zwischen Lagerbüchse und Welle, nach Abnutzung, wieder zu erstellen.

Aus der DE-C 944 355 ist ein geteiltes Kurbelwellenlager, welches druckölgeschmiert ist, bekannt, bei welchem, auch während des Betriebes, eine einfache Nachstellung möglich ist.

Schliesslich ist aus der GB-A 141 841 ein Gleitlagerkörper bekannt, der axial nicht durchgehend geschlitzt ist und eine leichte radiale Deformation mittels Stellschrauben erlaubt.

Bis anhin wurden gleitgelagerte Zahnradpumpen für einen relativ engen Viskositätsbereich des Fördergutes ausgelegt: Fördergutabhängig wurde eine geeignet dimensionierte Gleitlagerung eingesetzt. Zunehmend werden aber Zahnradpumpen für Fördergüter in einem weiten Bereich variierender Viskosität benötigt, was für die Verarbeitung mit ein und derselben Zahnradpumpe bezüglich Gleitlagerung höchst problematisch ist. Entweder ist für ein niedrigviskoses Fördergut das Lagerspiel zu gross und damit die Tragfähigkeit unzureichend, oder dasselbe Lagerspiel ist für höherviskose Produkte zu klein, mit der Folge zu hoher Lagertemperatur, z.B. für degradierbare, als Lagermedium eingesetzte Fördergüter.

Es besteht aber das Bedürfnis seitens der Anwender, für verschiedenartige Fördergüter dieselbe Pumpe einsetzen zu können; aus prozessökonomischen und finanziellen Gründen ist weder der Einsatz verschiedener spezifisch für die jeweiligen Fördergüter ausgelegter Pumpen noch ein jeweiliger Lagerwechsel an ein und derselben Pumpe erwünscht.

Es ist Aufgabe der vorliegenden Erfindung, eine Zahnradpumpe eingangs genannter Art zu schaffen, welche ermöglicht, flexibel in einem weiten Bereich rheostatisch verschiedene Fördergüter zu fordern.

Dies wird erfindungsgemäss durch Ausbildung der eingangs erwähnten Zahnradpumpe nach dem kennzeichnenden Teil von Anspruch 1 erreicht.

Es existieren Zahnradpumpen, bei denen die Rotoren mit Wellen aussengelagert sind, sowie Zahnradpumpen, bei denen die Zahnrotoren innengelagert sind, indem statorseitig eine feststehende Welle in den Rotor eingreift. Als zylindrische Lagerfläche wird im Sinne der vorliegenden Erfindung, im einen Fall, die zylindrische Innenfläche des statorseitigen Lagerkörpers verstanden, im andern Falle die zylindrische Aussenfläche der statorseitigen Lagerwelle.

Obwohl, im einfachsten Falle, der Schlitz axial durch den Lagerkörper verläuft, ist es durchaus möglich, und je nach Auslegung des Lagers, den Schlitz, weiterhin in axialer Richtung betrachtet, durchgehend schief bezüglich der Zylinderflächen-Mantellinien vorzusehen oder in verbundenen, azimutal versetzten Abschnitten.

Im weiteren ist es bekannt, die Gleitlager von Zahnradpumpen mit einer Schmiernut zu versehen, welche einerseits mit der Druckseite des Förderraumes mit den kämmenden Rotorzahnrädern kommuniziert, anderseits eine Einformung in der Zylinderlagerfläche bildet, derart, dass das als Lagermedium eingesetzte Fördergut vom Förderraum in das Lager gepresst wird.

In einer bevorzugten Ausführungsvariante der erfindungsgemässen Zahnradpumpe nach Anspruch 2 wird nun der primär aus Gründen der Lagerspieleinstellung vorgesehene Schlitz gleichzeitig als Schmiernut für das Lager eingesetzt und kommuniziert hierzu mit der Druckseite des genannten Förderraumes.

In einer weiteren Ausführungsvariante nach Anspruch 3 ist nebst dem Schlitz zur Lagerspieleinstellung am Lagerkörper eine Schmiernut vorgesehen.

Der Lagerkörper ist weiter, nach dem Wortlaut von Anspruch 4, drehfest mit dem Stator verbunden, ist aber in einer bevorzugten Ausführungsvariante durch axiales Ausziehen auswechselbar, indem beispielsweise bei aussengelagertem Rotor der Gehäusedeckel der Pumpe entfernt wird und der Lagerkörper, beispielsweise mit einer Kamm/Nut-Verbindung drehfest am Stator gelagert, ausgezogen wird.

Je nach Wahl des Lagerkörpermaterials und seiner Dimensionierung kann es weiter, dem Wortlaut von Anspruch 5 folgend, vorteilhaft sein, an der der Lagerfläche abgewandten Fläche des Lagerkörpers, d.h. bei Lagerkörper für aussengelagerte Rotoren an dessen äusseren Fläche, bei Lagerkörpern für innengelagerte Rotoren an dessen Innenfläche, mindestens eine im wesentlichen axial verlaufende, die radiale Elastizität des Lagerkörpers erhöhende Nut vorzusehen.

In Zusammenwirkung mit einer vorgesehenen Schmiernut kann eine solche primär die Elastizität erhöhende Nut durchaus zum Verteilen des Fördergutes in die Schmiernut eingesetzt werden. Dann kann beispielsweise die "Elastizitätsnut" mit der Druckseite des Förderraumes kommunizieren und über radiale Kanäle die Schmiernut mit Fördergut beschicken.

Dem Wortlaut von Anspruch 6 folgend, können die Stellorgane im wesentlichen radial oder, im Bereiche des Schlitzes, azimutal, also praktisch tangential auf den Lagerkörper wirken, oder es ist zwischen Lagerkörper und Stator eine Konusverbindung vorgesehen, derart, dass durch axiales Relativverschieben des Lagerkörpers bezüglich des Stators die Schlitzbreite verstellt und damit das Lagerspiel eingestellt wird. Letzterwähntes Vorgehen eignet sich insbesondere für die Verstellung der Schlitzbreite für innengelagerte Rotoren.

Im weiteren wird bevorzugterweise, nach dem Wortlaut von Anspruch 7, der Lagerkörper so dimensioniert und gelagert, dass sich die Schlitzbreite, z.B. aufgrund von Temperaturänderungen im Lager, selbsttätig ändern kann. Dies ermöglicht eine höchst einfache automatische Lagerspiel-Nachführung, indem bei ansteigender Lagertemperatur, aufgrund der thermischen Ausdehnung des Lagerkörpers, bei seiner entsprechenden Dimensionierung und Lagerung, das Lagerspiel selbsttätig erhöht wird, was zu einer Reduzierung der Lagertemperatur in regelndem Sinne führt.

Bei einer weiteren bevorzugten Ausführungsvariante der erfindungsgemässen Zahnradpumpe bilden die Stellorgane, beispielsweise hydraulische Stellglieder, das Stellglied in einem Regelkreis, woran Lagertemperatur und/oder Differenzdruck zwischen Druck- und Saugseite der Pumpe als gemessene Regelgrössen erfasst werden und, einzeln oder gewichtet kombiniert, durch Eingriff auf das Stellglied auf Einzel-SOLL-Werte oder einen Kombinations-SOLL-Wert geregelt werden.

Betrachtet man die Tatsache, dass Lagertemperatur und der erwähnte Differenzdruck durchaus als voneinander unabhängige Variablen betrachtet werden können, so ergibt sich regelungstechnisch eine Möglichkeit, beide gemessenen Regelgrössen zu berücksichtigen, dadurch, dass durch gewichtete Kombination, beispielsweise Addition von Temperatur- und Differenzdruck-Messsignal, ein kombiniertes IST-Wert-Signal gebildet wird, das mit einem SOLL-Wert-Signal verglichen wird, um dann auf die einzige vorgesehene Stellgrösse, nämlich das Lagerspiel, via Stellen der erwähnten Schlitzbreite, einzugreifen.

Ein bevorzugtes Verfahren zur Einstellung der Schlitzbreite an der erfindungsgemässen Zahnradpumpe zeichnet sich nach dem Wortlaut von Anspruch 9 bzw. 10 aus.

Die Erfindung wird anschliessend beispielsweise anhand von Figuren erläutert.

Es zeigen:

Fig. 1a und 1b    zur Klarstellung, den angesprochenen Lagerkörper bei aussengelagertem Rotor (a), (b) bei innengelagertem Rotor;

Fig. 2    in schematischer Darstellung ein erfindungsgemässes Gleitlager an einer erfindungsgemässen Zahnradpumpe mit hydraulischer Stellanordnung der Schlitzbreite;

Fig. 3    einen Ausschnitt aus der Anordnung nach Fig. 2 mit einer weiteren Ausführung einer Stellanordnung;

Fig. 4    an einem Lagerblock einer erfindungsgemässen Zahnradpumpe, einen mit Schlitz und Schmiernut versehenen erfindungsgemässen Lagerkörper;

Fig. 5    in Darstellung analog zu Fig. 4, eine Ausführungsvariante, woran der Schlitz gleichzeitig als Schmiernut eingesetzt ist;

Fig. 6    in Darstellung analog zu den Fig. 4 und 5, eine Ausführungsvariante, woran die radiale Elastizität des Lagerkörpers erhöht ist und bevorzugterweise eine der hierzu vorgesehenen Nuten die Schmiernut mit Fördergut beschickt;

Fig. 7    im Längsschnitt, schematisch, ein erfindungsgemässes Lager an einer erfindungsgemässen Zahnradpumpe, bei dem, über Keilwirkung, der Schlitz verstellt wird, am Beispiel eines aussengelagerten Rotors;

Fig. 8    in Darstellung analog zu Fig. 7, eine analog wirkende Anordnung für innengelagerten Rotor;

Fig. 9    in Form eines Signalfluss-Funktionsblockdiagrammes, vereinfacht, die erfindungsgemässe Zahnradpumpe mit in Funktion der Lagertemperatur und des Differenzdruckes über der Pumpe gestelltem Lagerspalt, als Beispiel des erfindungsgemässen Einstellverfahrens der Schlitzbreite an der erfindungsgemässen Zahnradpumpe.

In Fig. la ist ein Zahnradpumpenrotor 1 schematisch dargestellt, mit aussengelagerter Welle 3 und einem im Lagerbereich angeordneten Lagerkörper 5.

Als Lagerkörper wird im weiteren ein Teil bezeichnet, der eine der Lagerflächen aufweist.

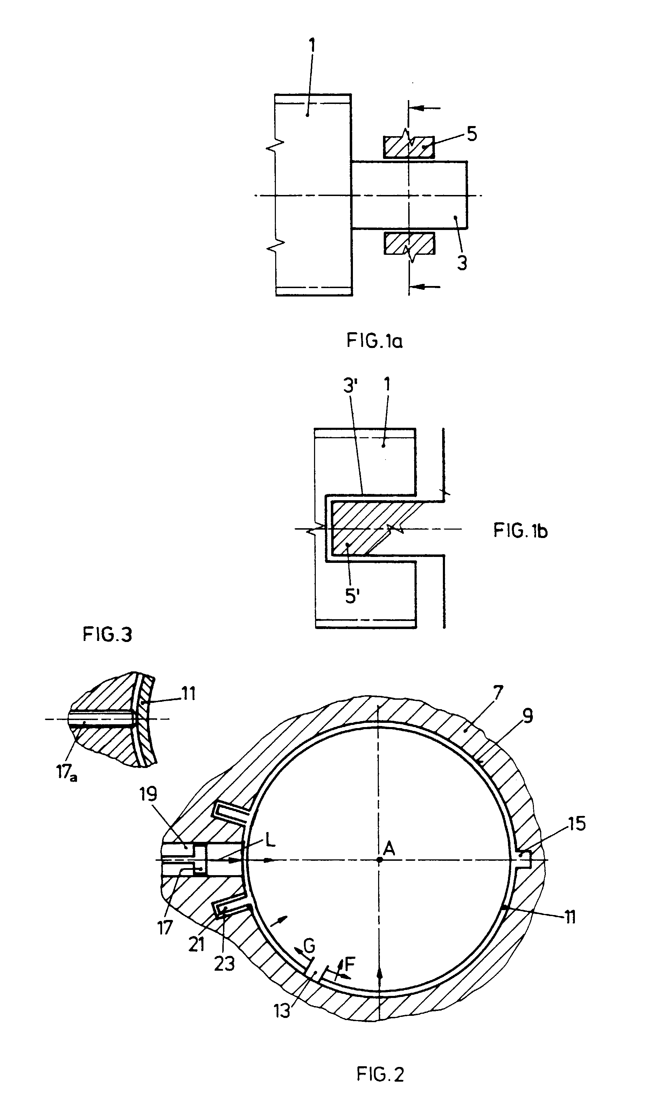

In Fig. 1b ist, analog, ein innengelagerter Rotor 1 einer Zahnradpumpe dargestellt, mit Lagerbohrung 3' und Lagerkörper am Wellenstummel 5'.

In den nachfolgenden Fig. 2 bis 7 wird die Erfindung anhand des Gleitlagers für einen aussengelagerten Zahnradpumpenrotor dargestellt; die diesbezüglichen Erläuterungen lassen sich aber durch den Fachmann ohne weiteres auf den Sachverhalt innengelagerter Rotoren gemäss Fig. lb übertragen.

In Fig. 2 ist mit 7 generell der Stator einer Zahnradpumpe bezeichnet, mit der Zylinderbohrung 9 zur Aufnahme der Welle 3 eines Rotors. In der Bohrung 9 ist ein erfindungsgemässer Lagerkörper 11 angeordnet, welcher spangenartig, in Richtung der Rotorachse A betrachtet, durchgehend einen Schlitz 13 aufweist. Damit kann der Lagerkörper 11 im Rahmen seiner radialen Eigenelastizität, wie mit den Pfeilen F angedeutet, in der Bohrung 9 federnd komprimiert werden. Der Lagerkörper 11 ist drehfest am Stator 7 befestigt, beispielsweise mit Hilfe einer Kamm/Nut-Verbindung 15, welche vorzugsweise ein Ausziehen in Axialrichtung des Lagerkörpers 11, beispielsweise bei entferntem Gehäusedeckel der Pumpe, Auswechseln des Lagerkörpers 11 zulässt.

Der Stellantrieb für die Breite des Spaltes 13 und damit für das Lagerspiel umfasst, gemäss Fig. 2, einen z.B. pneumatischen Kolben 17 in einer entsprechenden Zylinderbohrung 19 im Stator 7. Lagerseitig ist der übertrieben lang dargestellte Zylinderraum L fördermediumgefüllt, und beidseits der Einmündungszone der Zylinderbohrung 19 ist der Lagerkörper 11 mit Dichtungsleisten 21 in statorseitigen Nuten 23 geführt, was im übrigen das Vorsehen der Verbindung bei 15 gegebenenfalls unnötig macht.

Durch die Dichtungsleisten 21 wird der Einmündungsbereich der Zylinderbohrung 19, L, mindestens mittels Druckstufen gegen den übrigen Ringspalt zwischen Lagerkörper 11 und Stator 7 gedichtet, so dass durch Erhöhung des Druckes im Raume L der spangenartige Lagerkörper 11 komprimiert wird und das Lagerspiel verringert wird.

Gemäss Fig. 3 kann auch ein Stössel 17a, z.B. eine Gewindestange, direkt auf den Körper 11 wirken.

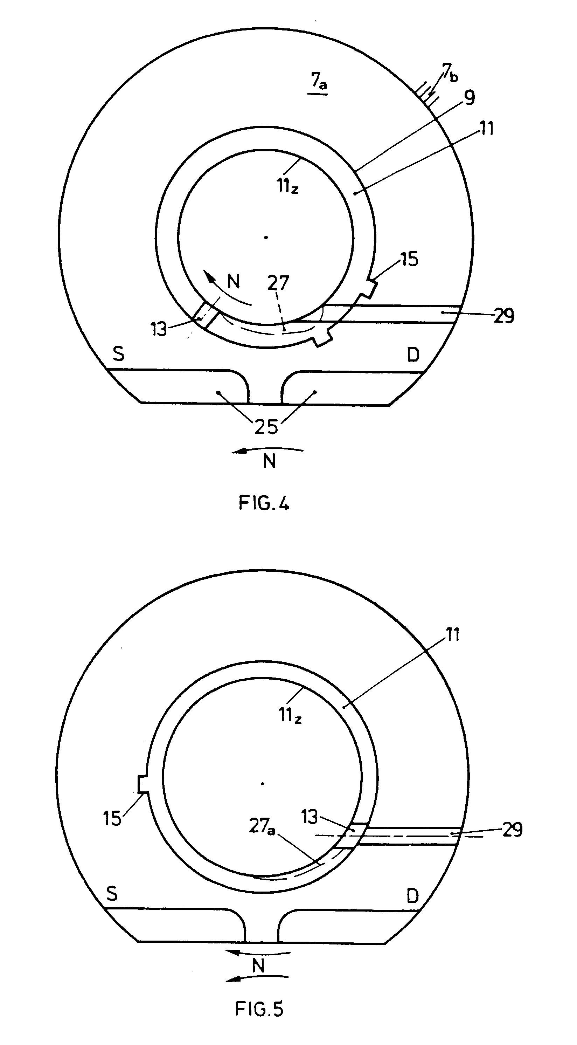

In Fig. 4 ist, in Aufsicht, als Teil des Stators 7, ein Lagerblock 7a dargestellt, welcher in üblicher Art und Weise in eine entsprechende Bohrung des Pumpengehäuses 7b eingelassen wird. Die dem Förderraum zugewandte Stirnfläche des Lagerblockes 7a weist beispielsweise Druckentlastungsnuten 25 auf. Die Druckseite der Anordnung ist entsprechend der beispielsweise gewählten Rotordrehrichtung N mit D bezeichnet, die Saugseite mit S.

Der erfindungsgemäss in der Bohrung 9 des Lagerblockes 7a gelagerte Lagerkörper 11 mit Schlitz 13 (die Stellorgane für die Breite des Schlitzes 13 sind hier nicht mehr dargestellt) weist eine Schmiernut 27 auf, welche sich entlang einem vorgegebenen Bereich druckseitig, D, der zylindrischen Lagerfläche $11_Z$ erstreckt und die über eine Nut 29 in Lagerkörper 11 und Lagerblock 7a mit der Druckseite D des Zahnradpumpen-Förderraumes kommuniziert. Vorsehen derartiger Schmiernuten an gleitgelagerten Rotorwellen von Zahnradpumpen sind an sich bekannt.

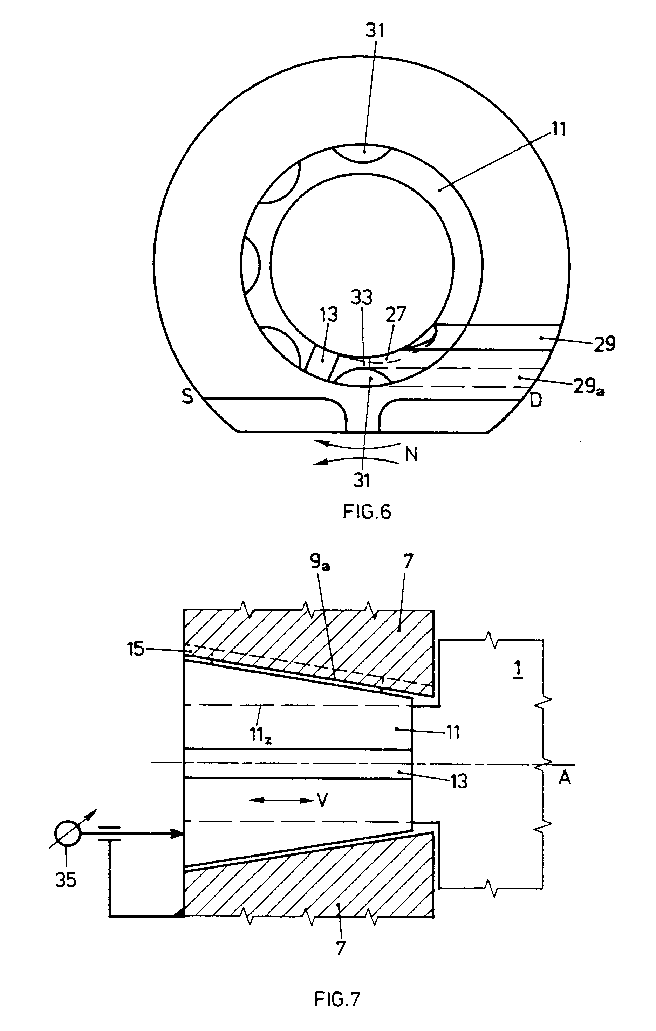

In Fig. 5 ist in analoger Darstellung zu derjenigen von Fig. 4 eine weitere Ausführungsvariante des erfindungsgemässen Lagers dargestellt. Es sind dieselben Positionszeichen wie in Fig. 4 verwendet. Der Schlitz 13 im Lagerkorper 11 ist zur Bildung einer Schmiernut $27_a$ in einen erweiterten Bereich der Zylinderlagerfläche $11_Z$ des Lagerkorpers 11 eingearbeitet, und es kommuniziert der nun als Schmiernut und Stellschlitz wirkende Schlitz 13 über die Nut 29 mit der Druckseite des Zahnradpumpen-Förderraumes. Dabei ist durch Ausbildung des Schlitzes 13 und/oder der Nut 29 sichergestellt, dass die Verbindung zwischen Schmiernut $27_a$ und Druckseite D des Förderraumes bei jeder Stellposition der Breite des Schlitzes 13 erhalten bleibt.

Ausgehend von den Darstellungen in den Fig. 4 und 5, zeigt Fig. 6 einen wesentlich massiveren Lagerkörper 11, an dessen Aussenperipherie, zur Sicherstellung stellgenügender radialer Elastizität, Nuten 31 eingearbeitet sind. Ist im Lagerkörper 11, in Analogie zur Darstellung von Fig. 4, eine Schmiernut 27 eingearbeitet, so kann eine oder mehrere der Nuten 31, mit Durchlässen 33 versehen, zusätzlich oder anstelle der Nut 29 die Schmiernut 27 mit Förder- bzw. Schmiergut beschicken; wirkt die Nut 31 anstelle der Nut 29, so wird sie, wie gestrichelt bei $29_a$ dargestellt, mit der Druckseite D des Förderraumes verbunden. Soll die Nut fördermediumbeschickt sein, so wird sie axial aussen verschlossen, andernfalls axial innen, damit das Lager von dem als Schmiermedium wirkenden Fördermedium nicht umströmt wird.

Wie oben erwähnt wurde, kann ein zu geringer Lagerspalt am Gleitlager eine unzulässige Erhöhung der Lagermediumtemperatur bewirken, was einerseits das als Schmiergut verwendete Fördergut so beeinträchtigen kann, dass es nicht mehr in den Pumpenförderstrom rückgeleitet werden kann, oder so, dass seine Tragfähigkeit unzulässig abnimmt. Der Lagerkörper 11 ist nun bevorzugterweise so dimensioniert und aus einem solchen Material gefertigt, dass sich bei Temperaturerhöhung im Lager, aufgrund temperaturbedingter Materialdehnung, der Spalt 13 aufweiten kann, womit der Lagerspalt vergrössert wird und der Temperaturerhöhung gegengewirkt wird. Dadurch erfolgt eine automatische Temperaturstabilisierung im Lager.

Rückblickend auf Fig. 2 wurde dort ein möglicher Stelltrieb für das Stellen der Breite des Spaltes 13 und damit des Lagerspaltes dargestellt, der mindestens im wesentlichen radial wirkt. Selbstverständlich kann der Stellantrieb insbesondere im Bereich des Spaltes 13, wie bei G (Fig. 2) dargestellt, auch azimutal wirkend ausgelegt werden.

In gewissen Fällen wäre es aber zweckdienlicher, eine Stellkraft axial auf das Lager wirken lassen zu können.

In Fig. 7 ist eine weitere Ausführungsvariante des erfindungsgemässen Lagers zu diesem Zweck und für aussengelagerte Rotoren dargestellt. Dabei können alle bisher vorgestellten Ausführungsvarianten auf die noch zu beschreibende Art und Weise gestellt werden. Die Bohrung $9_a$ im Stator 7 ist kegelförmig ausgebildet. Darin gleitet, in Grenzen axial verschieblich, der Lagerkörper 11 mit Spalt 13, entsprechend der Kegelneigung der Bohrung $9_a$ an seiner Aussenwand kegelförmig geformt. Die Zylinderlagerfläche $11_z$ bleibt zylinderförmig. Weiterhin ist der Lagerkörper 11, beispielsweise mit der Kamm/Nut-Verbindung 15, drehfest am Stator 7 gelagert. Durch den schematisch dargestellten Stellantrieb 35, beispielsweise eine Stellspindel, kann der Lagerkörper 11 in Richtung der Achse A, axial, radial federnd, bezüglich des Stators 7 verschoben - V - werden, wodurch die Breite des Spaltes 13 verstellt wird.

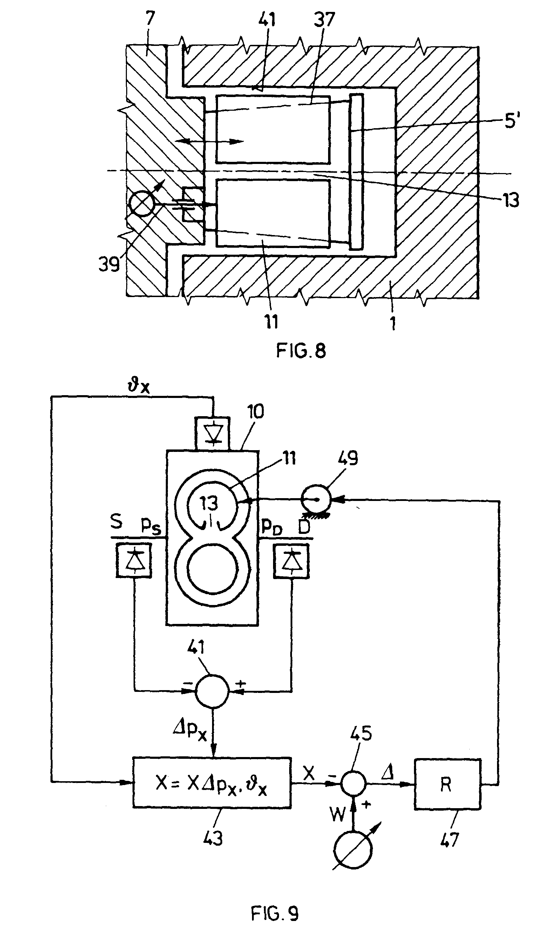

Rückblickend auf Fig. 1b ist ersichtlich, dass insbesondere bei innengelagerten Rotoren der direkte radiale Stelleingriff auf den geschlitzten Lagerkörper 5' schwierig sein kann. Hier insbesondere drängt sich ein Stellen der Spaltbreite durch axial wirkende Stellkräfte auf. Dieses Vorgehen ist in Fig. 8 dargestellt. Der Lagerwellenzapfen 5' des Stators 7 weist in einem Bereich eine Kegelfläche 37 auf, entlang welcher die entsprechend geformte Kegelinnenfläche des erfindungsgemässen Lagerkörpers 11 mit Schlitz 13 axial gleitet. Mit einem Axialsteller, schematisch bei 39 dargestellt, wie einer Stellspindel, wird der bezüglich des Zapfens 5' drehfeste Lagerkörper 11 axial verschoben und damit die Breite des Spaltes 13 und des Lagerspaltes 41 verstellt.

In Fig. 9 ist anhand eines Signalfluss-Funktionsblockdiagrammes ein bevorzugtes Stellverfahren für die Lagerspaltbreite an einer erfindungsgemässen Zahnradpumpe 10 dargestellt. In der Darstellung von Fig. 9 ist lediglich schematisch und lediglich am einen Rotor ein erfindungsgemässer Lagerkörper 11 eingetragen. Der druckseitige Anschluss der Zahnradpumpe 10 ist mit D, der saugseitige wiederum mit S bezeichnet, mit den entsprechenden Drücken $p_s$ und $p_D$. Beide Drücke werden erfasst und ein der Druckdifferenz $\Delta p_x$ entsprechendes elektrisches Signal an einer Differenzeinheit 41 gebildet, sei dies an einer elektronischen Differenzeinheit oder direkt an einem Differenzdrucksensor.

Im weiteren wird am erfindungsgemäss bestückten Lager die Temperatur $\vartheta_x$ gemessen. An einer Verrechnungseinheit 43 wird aus den gemessenen Signalen, entsprechend $\Delta p_x$ und $\vartheta_x$, eine gemessene Regel(IST)-Grösse X berechnet, entsprechend

$$X = X(\Delta p_x, \vartheta_x).$$

Die Funktion X kann dabei eine gewichtete Addition der gemessenen Grössen sein, den Einfluss berücksichtigend, den eine Stellung des Lagerspaltes am Körper 11 auf Lagertemperatur bzw. Differenzdruck nimmt. Die berechnete Regelgrösse X wird an einer Differenzbildungseinheit 45 mit einem Führungssignal W verglichen. Die Regeldifferenz $\Delta$, gegebenenfalls über einen Regler 47, wirkt auf den Stellantrieb 49 für die Breite des Spaltes 13 am Lagerkörper und damit des Lagerspaltes.

Auf diese Art und Weise ist es möglich, die Lagerverhältnisse automatisch den jeweiligen Betriebsbedingungen anzupassen. Selbstverständlich ist es aber auch durchaus möglich und in vielen Fällen ausreichend, je nach Betriebsbedingungen die Lagerverhältnisse durch Veränderung des Spaltes 13 manuell zu stellen.

## Patentansprüche

1. Zahnradpumpe, woran mindestens der eine Rotor mindestens einseitig fördermediumgeschmiert am Stator gleitgelagert ist, welch letzterer hierzu einen eine im wesentlichen zylindrische Lagerfläche definierenden Lagerkörper (11) umfasst, dadurch gekennzeichnet, dass der Lagerkörper (11), in axialer Richtung betrachtet, durchgehend spangenartig geschlitzt (13) ist und Stellorgane (17, 19; 39; 49) für die Schlitzbreite auf den Lagerkörper (11) wirken, als Stellorgane für die Umstellung der Pumpe zur Förderung unterschiedlicher Fördergüter.

2. Zahnradpumpe nach Anspruch 1, dadurch gekennzeichnet, dass der Schlitz (13) als Schmiernut (27a) für das Lager wirkt und hierzu mit der Druckseite (D) des Förderraumes mit den kämmenden Rotorzahnrädern kommuniziert.

3. Zahnradpumpe nach einem der Ansprüche 1 oder 2, dadurch gekennzeichnet, dass an der Lagerfläche (IIz) eine mit der Druckseite (D) des Förderraumes der Zahnradpumpe, worin die Zahnräder der Rotoren kämmen, kommunizierende (29) Schmiernut (27) eingearbeitet ist.

4. Zahnradpumpe nach einem der Ansprüche 1 bis 3, dadurch gekennzeichnet, dass der Lagerkörper (11) in einem Umfangbereich mit dem Stator (7) drehfest (15) verbunden ist, vorzugsweise durch axiales Ausziehen auswechselbar ist.

5. Zahnradpumpe nach Anspruch 4, dadurch gekennzeichnet, dass der Lagerkörper (11) auf seiner der Lagerfläche (llz) abgewandten Aussenfläche mindestens eine im wesentlichen axial verlaufende, die radiale Elastizität des Lagerkörpers (11) erhöhende Nut (31) aufweist.

6. Zahnradpumpe nach einem der Ansprüche 1 bis 5, dadurch gekennzeichnet, dass die Stellorgane (17, 17a) im wesentlichen radial oder azimutal auf den Lagerkörper (11) wirken oder axial über eine Keilanordnung auf den Lagerkörper (11).

7. Zahnradpumpe nach einem der Ansprüche 1 bis 6, dadurch gekennzeichnet, dass der Lagerkörper (11) so dimensioniert und gelagert ist, dass sich die Schlitzbreite, aufgrund von Temperaturänderungen im Lager, selbsttätig ändern kann.

8. Zahnradpumpe nach einem der Ansprüche 1 bis 7, dadurch gekennzeichnet, dass die Stellorgane (49) das Stellglied in einem Regelkreis bilden, woran Lagertemperatur ($\vartheta_x$) und/oder Differenzdruck ($\Delta p_x$) zwischen Druck- und Saugseite der Pumpe als gemessene Regelgrössen erfasst, je einzeln oder gewichtet kombiniert, durch Eingriff auf das Stellglied (49) geregelt werden.

9. Verfahren zur Einstellung des Lagerspiels an einer Zahnradpumpe nach einem der Ansprüche 1 bis 8, dadurch gekennzeichnet, dass Lagertemperatur ($\vartheta_x$) und/oder Differenzdruck ($\Delta p_x$) zwischen Saug- und Druckseite der Pumpe als Regelgrösse gemessen werden und mit dem Lagerspiel als Stellgrösse geregelt werden.

10. Verfahren nach Anspruch 9, dadurch gekennzeichnet, dass man aus gemessener Lagertemperatur und gemessenem Differenzdruck, gewichtet, eine kombinierte Regelgrösse bildet.

**Claims**

1. A gear pump wherein at least one of the rotors is mounted at least unilaterally on a slide bearing on the stator and is lubricated by the material to be conveyed, said stator comprising to this end a bearing body (11) defining a substantially cylindrical bearing surface, characterized in that said bearing body (11) considered axially is continuously slit (13) like a clasp, and adjusting members (17, 19 ; 39 ; 49) for the slit width act on said bearing body (11) as adjusting members to adapt the pump for conveying different products.

2. The gear pump according to claim 1, characterized in that said slit (13) acts as a lubricating groove (27a) for the bearing and communicates to this end with the pressure side (D) of the delivery space wherein the rotor gearwheels engage.

3. The gear pump according to any of claims 1 or 2, characterized in that on said bearing surface (llz) there is provided a lubricating groove (27) that communicates (29) with said pressure side (D) of the gear pump delivery space wherein the rotor gearwheels engage.

4. The gear pump according to any of claims 1 to 3, characterized in that in a peripheral region said bearing body (11) is firmly attached (15) to stator (7) for rotating and is preferably replaceable by being axially removed.

5. The gear pump according to claim 4, characterized in that said bearing body (11), on its outer surface facing away from said bearing surface (llz), comprises at least one groove (31) that extends substantially axially and increases the radial elasticity of said bearing body (11).

6. The gear pump according to any of claims 1 to 5, characterized in that said adjusting members (17, 17a) have a substantially radial or azimuthal action on said bearing body (11) or an axial action on the latter by means of a wedge arrangement.

7. The gear pump according to any of claims 1 to 6, characterized in that said bearing body (11) is sized and mounted such that the slit width can change automatically due to temperature variations in the bearing.

8. The gear pump according to any of claims 1 to 7, characterized in that said adjusting members (49) form the adusting element in a regulator circuit wherein bearing temperature ($\vartheta_x$) and/or differential pressure ($\Delta p_x$) between the pressure side and the inlet side of the pump are detected as measured regulating variables and they are regulated, individually or weighted and combined, by acting on adjusting element (49).

9. A method for adjusting the bearing clearance in a gear pump according to any of claims 1 to 8, characterized in that bearing temperature ($\vartheta_x$) and/or differential pressure ($\Delta p_x$) between the inlet side and the pressure side of the pump are measured as regulating variables and they are regulated with the bearing clearance as an adjusting variable.

10. The method according to claim 9, characterized in that a combined regulating variable is formed from the measured bearing temperature and from the measured differential pressure, once weighted.

## Revendications

1. Pompe à engrenages dans laquelle l'un au moins des rotors est monté au moins unilatéralement sur palier lisse au niveau du stator en étant lubrifié par le produit à transporter, lequel stator comporte à cet effet un corps d'appui (11) qui définit une surface d'appui globalement cylindrique, caractérisée en ce que le corps d'appui (11), considéré dans le sens axial, est fendu (13) d'un bout à l'autre à la manière d'une agrafe, et des organes de réglage (17, 19 ; 39, 49) pour la largeur de fente agissent sur le corps d'appui (11), comme organes de réglage pour l'adaptation de la pompe en vue du transport de produits différents.

2. Pompe à engrenages selon la revendication 1, caractérisée en ce que la fente (13) agit comme rainure de lubrification (27a) pour le palier et communique à cet effet avec le côté pression (D) de l'espace de refoulement qui comporte les roues dentées des rotors en prise.

3. Pompe à engrenages selon la revendication 1 ou 2, caractérisée en ce qu'il est prévu, réalisée sur la surface d'appui (11z), une rainure de lubrification (27) qui communique (29) avec le côté pression (D) de l'espace de refoulement de la pompe à engrenages dans lequel les roues dentées des rotors sont en prise.

4. Pompe à engrenages selon l'une des revendications 1 à 3, caractérisée en ce que dans une zone périphérique, le corps d'appui (11) est relié, fixe en rotation (15), au stator (7), en pouvant être changé de préférence grâce à une extraction axiale.

5. Pompe à engrenages selon la revendication 4, caractérisée en ce que le corps d'appui (11), sur sa surface extérieure opposée à la surface d'appui (11z), comporte au moins une rainure (31) globalement axiale qui augmente l'élasticité radiale du corps d'appui (11).

6. Pompe à engrenages selon l'une des revendications 1 à 5, caractérisée en ce que les organes de réglage (17, 17a) exercent sur le corps d'appui (11) une action globalement radiale ou azimutale, ou bien une action axiale par l'intermédiaire d'un dispositif formant coin.

7. Pompe à engrenages selon l'une des revendications 1 à 6, caractérisée en ce que le corps d'appui (11) est dimensionné et monté pour que la largeur de fente puisse varier automatiquement en fonction des variations de température dans le palier.

8. Pompe à engrenages selon l'une des revendications 1 à 7, caractérisée en ce que les organes de réglage (49) forment l'élément de réglage dans un circuit de régulation au niveau duquel la température de palier ($\vartheta_x$) et/ou la pression différentielle ($\Delta p_x$) entre le côté pression et le côté aspiration de la pompe sont détectées comme grandeurs commandées mesurées et, combinées individuellement ou en étant pondérées, sont réglées grâce à une intervention sur l'élément de réglage (49).

9. Procédé pour régler le jeu de palier sur une pompe à engrenages selon l'une des revendications 1 à 8, caractérisé en ce que la température de palier ($\vartheta_x$) et/ou la pression différentielle ($\Delta p_x$) entre le côté aspiration et le côté pression de la pompe sont mesurées comme grandeurs commandées et sont réglées avec le jeu de palier comme grandeur de réglage.

10. Procédé selon la revendication 9, caractérisé en ce qu'on forme à partir de la température de palier et de la pression différentielle mesurées, une fois pondérées, une grandeur commandée combinée.

FIG.1a

FIG.1b

FIG.3

FIG.2

8

FIG.4

FIG.5

FIG.6

FIG.7

EP 0 620 368 B1

FIG. 8

FIG. 9